# EUROPÄISCHE PATENTSCHRIFT

(11) **EP 0 581 127 B1**
(45) Veröffentlichungstag und Bekanntmachung des Hinweises auf die Patenterteilung: **06.11.1996**
(21) Anmeldenummer: 93111348.4
(22) Anmeldetag: 15.07.1993
(51) Int. Cl.: A01B 61/04

(54) **Pflugkörperaufhängung**
Plow body suspension
Suspension pour corps de charrue

(30) Priorität: 25.07.1992 DE 4224657
(43) Veröffentlichungstag der Anmeldung: 02.02.1994
(73) Patentinhaber: KVERNELAND KLEPP AS, N-4344 Kvernaland (NO)
(72) Erfinder: Nsa, Olav, N-4344 Kvernaland (NO)
(74) Vertreter: König, Reimar, Dr.-Ing.

(56) Entgegenhaltungen:
- EP-A- 0 184 890
- DE-A- 2 024 509
- DE-A- 4 137 587
- FR-A- 2 135 243
- FR-A- 2 381 451
- FR-A- 2 594 625
- US-A- 4 519 461

## Beschreibung

Die Erfindung bezieht sich auf eine Pflugkörperaufhängung für einen ein- oder mehrscharigen Pflug, insbesondere einen Dreh- oder Wendepflug mit mindestens einem Pflugkörperpaar, der beim Auftreten eines hohen Pflugwiderstandes ein begrenztes elastisches Ausweichen der Pflugkörper erlaubt.

Die deutsche Offenlegungsschrift 41 37 587 beschreibt einen derartigen Pflug, bei dem jeder Grindel verschwenkbar am Pflugrahmen montiert ist und sich im Abstand von dem jeweiligen Drehpunkt am Pflugrahmen ein Drehbegrenzungsanschlag in Form eines Brechbolzens befindet. Der Grindel ist dabei gelenkig mit einem Lenker verbunden, der im Abstand von der Verbindungs- bzw. Gelenkstelle beispielsweise über einen Anschlag zur unterstützenden Anlage an dem benachbarten Grindel kommt und mit Abstand von der Abstützstelle bzw. dem Anschlag gelenkig mit einem Stoßdämpfer verbunden ist. Der Stoßdämpfer ist seinerseits mit dem Pflugrahmen oder einem am Pflugrahmen angeordneten Teil, beispielsweise einem Lenker verbunden, der seinerseits mit einem einen anderen Pflugkörper tragenden Grindel verbunden ist und zusammen mit dem einen Pflugkörper ein Pflugkörperpaar eines Drehpflugs bildet.

Derartige Pflüge haben sich beim Pflügen sehr harter Böden mit nur wenigen festen Hindernissen wie erdfesten Steinen durchaus bewährt. Wenn ein Pflugkörper jedoch auf ein solches Bodenhindernis trifft, kommt es zu einem Zerbrechen des Brech- bzw. Scherbolzens, womit die Systembelastung auf ein bestimmtes Maß begrenzt ist. Damit ist jedoch der Nachteil verbunden, daß der Benutzer das Pflügen unterbrechen und einen neuen Scherbolzen montieren muß, was zeitaufwendig ist.

Enthält der Boden jedoch viele solcher Hindernisse in Gestalt erdfester Steine, bedarf es schon einer automatischen Steinsicherung, die ein Anheben der Pflugkörper bis über das Hindernis und nach dessen Passieren ein Widerabsenken bewirkt.

Der Erfindung liegt daher die Aufgabe zugrunde, einen Pflug mit einer Steinsicherung zu schaffen, die auf Brech- bzw. Scherbolzen verzichtet sowie beim Auftreffen auf ein Bodenhindernis ein automatisches Anheben und Widerabsenken des betreffenden Pflugkörpers erlaubt.

Die Lösung dieser Aufgabe besteht in einem Pflug gemäß Anspruch 1. Dabei kann der Grindel zwischen mit dem Pflugrahmen verbundenen Platten gelagert sein.

Vorzugsweise ist der Hebel bogen- oder winkelförmig ausgebildet. Als Kraftspeicher eignet sich insbesondere ein Hydraulikzylinder, der über einen Zapfen mit dem Hebel lösbar verbunden ist und sich über eine Kugel am Pflugrahmen abstützen kann. Die Kugel kann an einem mit dem Pflugrahmen verbundenen Bügel angeordnet sein.

Andererseits kann jedoch auch zwischen den Enden der Hebel zweier benachbarter Grindel ein Kniehebel angeordnet sein, in dessen Gelenk der Kraftspeicher, beispielsweise eine Schraubenfeder angreift. Stattdessen kann jedoch auch eine Blattfeder gelenkig mit einem Stab verbunden sein und der Stab im Kniehebelgelenk angreifen. Schließlich kann jeder Hebel im Bereich seines freien Endes mit einer am Grindel anliegenden Stellschraube versehen sein.

Die Erfindung wird nachfolgend anhand von in der Zeichnung schematisch dargestellten Ausführungsbeispielen des näheren erläutert. In der Zeichnung zeigen:
- Fig. 1: die Seitenansicht der Pflugkörperaufhängung eines erfindungsgemäßen Dreh- bzw. Wendepflugs,
- Fig. 2: eine vergrößerte Darstellung eines Teils der Seitenansicht nach Fig. 1 mit den einzelnen Bauteilen in normaler Pflügestellung,
- Fig. 3: eine Draufsicht auf die Pflugkörperaufhängung nach Fig. 2,
- Fig. 4: die Pflugkörperaufhängung nach Fig. 1, jedoch beim Überfahren eines Bodenhindernisses,
- Fig. 5: die Teile der Pflugkörperaufhängung nach Fig. 2, jedoch beim Überfahren eines Bodenhindernisses entsprechend Fig. 4,
- Fig. 6: eine Pflugkörperaufhängung ähnlich der nach Fig. 1, jedoch mit einem Kraftspeicher in Gestalt einer Schraubenfeder,
- Fig. 7: eine Draufsicht auf einen Teil der Pflugkörperaufhängung nach Fig. 6 in vergrößerter Darstellung,
- Fig. 8: einen Teil der Fig. 6 in vergrößerter Darstellung,
- Fig. 9: die Pflugkörperaufhängung nach Fig. 6 beim Überfahren eines Bodenhindernisses,
- Fig. 10: die Seitenansicht einer Pflugkörperaufhängung ähnlich der nach Fig. 6, jedoch mit einem Kraftspeicher in Gestalt einer Blattfeder,
- Fig. 11: eine Draufsicht auf einen Teil der Pflugkörperaufhängung nach Fig. 10,
- Fig. 12: einen Teil der Darstellung in Fig. 11 in vergrößertem Maßstab und
- Fig. 13: die Pflugkörperaufhängung nach Fig. 10 beim Überfahren eines Bodenhindernisses.

Ein nur mit seiner Pflugkörperaufhängung dargestellter Pflug besitzt einen Grindelträger 1, der starr mit dem Pflugrahmen verbunden ist, und eine horizontale Mittelebene 1'.

Der eine Pflugkörper 2 eines Pflugkörperpaars befindet sich in der Arbeitsstellung, während sich der andere Pflugkörper 2' in seiner Ruhestellung befindet.

Die beiden Pflugkörper 2, 2' sind jeweils an einem eigenen Grindel 3, 3' angeordnet.

Jeder Grindel 3, 3' besitzt seine eigene untereinander identische Aufhängung, von denen im folgenden nur eine beschrieben ist. In den Zeichnungen sind jedoch gleiche Teile der beiden Aufhängungen mit derselben Bezugsziffer, jedoch mit einem Apostroph für die eine Aufhängung bezeichnet.

Der Grindel 3 ist in einem Lager 4 verschwenkbar an dem Grindelträger 1 des nicht dargestellten Pflugrahmens gelagert; an dem Grindelträger 1 sind zwei Platten 5, 5' befestigt, die mittels Abstandhaltern beispielsweise in Form von weiter unten noch zu beschreibenden Überlasthebeln in gegenseitiger Parallellage gehalten werden. Im Abstand von dem Lager 4 ist der Grindel 3 in einem Schwenklager 7 mit einem verschwenkbaren Lenker 6 verbunden. Der Lenker 6 besitzt einen Arm 8 und einen demgegenüber abgewinkelten Arm 9. Am freien Ende des abgewinkelten Arms 9 befindet sich ein Anschlag, beispielsweise eine Stellschraube 10.

An dem dem Gelenkpunkt 6 gegenüberliegenden Ende des Lenkerarms 8 ist der Lenker 6 im Bereich des Übergangs zwischen den beiden Lenkerteilen 8, 9 über einen Gelenkzapfen 12 mit einem Stoßdämpfer 11 verbunden.

Die Stellschrauben 10, 10' dienen zum Justieren der Lenker 6, 6' bzw. zu einem geringfügigen Verschwenken um deren Lager 7, 7', um so die gewünschte Federkraft zwischen den beiden Pflugkörpern 3, 3' einzustellen.

Die Aufhängung des oberen Grindels 3' entspricht derjenigen des unteren Grindels 3 mit dem in der Arbeitsstellung befindlichen Pflugkörpers 2 und besteht u.a. aus einem Lager 4' zwischen dem Grindelträger und den Platten 5, 5', einem Lenker 6' mit einem geraden Arm 8' und einem abgewinkelten Arm 9', Lagern 7' und 12' sowie einer Stellschraube 10'.

Der Stoßdämpfer 11 erstreckt sich zwischen den beiden jeweils an einem Grindel für die beiden Pflugkörper 2, 2' eines Drehpflugs gelagerten Lenkern 6, 6'. Solange nicht gepflügt wird, oder beim normalen, hindernisfreien Pflügen drückt der Stoßdämpfer 11 die beiden Grindel 3, 3' auseinander und verschwenkt diese um einen begrenzten Winkel jeweils um ihre Zapen 4, 4'. Diese Schwenkbewegung wird durch den Bodenwiderstand und weitere, unten noch zu beschreibende Mittel begrenzt.

Der Stoßdämpfer 11 kann aus Gummi oder einem elastischen Kunststoff bestehen und ist an seinen Enden mit Befestigungslaschen 11', 11'' versehen. Des weiteren ist der Stoßdämpfer 11 mit einem Einstellmittel 13, beispielsweise einem Spannschloß versehen, mit dessen Hilfe sich über die beiden Stellschrauben 10, 10' hinaus seine Vorspannung einstellen läßt.

Die dargestellte Pflugkörperaufhängung entspricht insoweit der in der deutschen Offenlegungsschrift 41 37 587 auch hinsichtlich ihrer Arbeitsweise beschriebenen.

Die an die Stelle herkömmlicher Scherbolzen tretende Überlastungs- bzw. Steinsicherung besteht aus jeweils einem mit einem der beiden Grindel 3, 3' verbundenen Hebel 14, 14'.

Die Hebel 14, 14' sind ebenso wie die Grindel 3, 3' auf den Zapfen 4, 4' gelagert, die ihrerseits über die beiden Platten 5, 5' mit dem Grindelträger 1 fest verbunden sind.

Die beiden Hebel 14, 14' sind bogenförmig ausgebildet, wenngleich dies nicht von entscheidender Bedeutung ist.

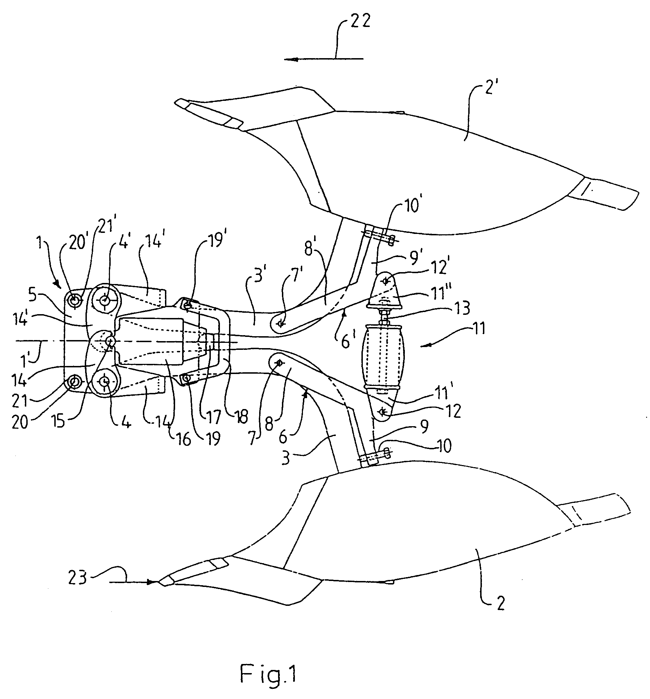

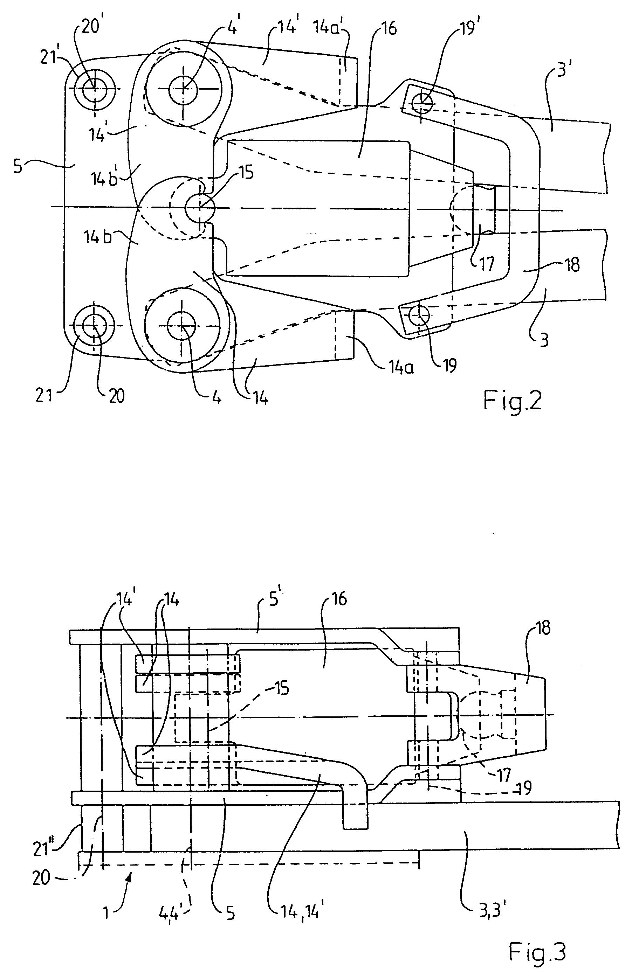

Beim normalen Pflügen (vgl. Fig. 1 bis 3) liegen die Enden 14a, 14a' der Hebel 14, 14' an den Grindeln 3, 3' und der jeweils benachbarten Platte 5, 5' an. Das gegenüberliegende Ende 14b, 14b' der Hebel 14, 14' stützt sich jeweils am Zapfen 15 eines Kraftspeichers in Gestalt eines hydraulischen Zylinders 16 ab.

Als Kraftspeicher eignen sich jedoch auch Schrauben-, Teller- oder Blattfedern.

Am anderen Ende stützt sich der Hydraulikzylinder 16 an einer Lagerkugel 17 eines mit den Platten 5, 5' verbundenen und an dem Grindelträger 1 mittels Schrauben 19, 19' befestigten Bügels 18 ab. Alle Komponenten der erfindungsgemäßen Steinsicherung befinden sich zwischen den Platten 5, 5' die mit Hilfe der Schrauben 19, 19' und 20, 20' am Grindelträger 1 festgelegt sind. Der Bügel 18 und Distanzhülsen 21, 21' halten die beiden Platten 5, 5' im richtigen Abstand voneinander. Darüber hinaus dient eine weitere Hülse 21'' als Abstandhalter zwischen der Platte 5 und dem Grindelträger 1.

Der Hydraulikzylinder 16 ist so angeordnet, daß er eine Kraft auf jeden der beiden unabhängig voneinander schwenkbar gelagerten Hebel 14, 14' ausübt.

Die Pflügerichtung ist durch einen Pfeil 22 und der Bodenwiderstand, d.h. die vom Erdreich und etwaigen Bodenhindernissen ausgehende Gegenkraft durch einen Pfeil 23 gekennzeichnet (vgl. Fig. 1).

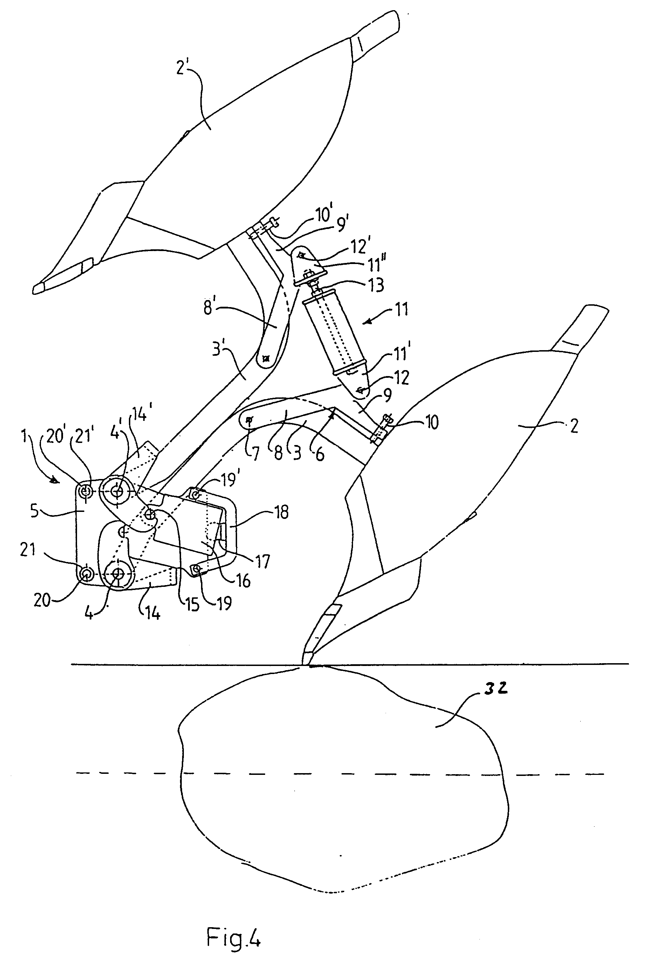

Übersteigt der Bodenwiderstand die ihm entgegenwirkende Kraft des Hydraulikzylinders 16, dann reagiert die Hebel 14' und beginnt sich um den Zapfen 4' zu drehen; dann bewegt sich der Pflugkörper 2 nach oben über ein Bodenhindernis bzw. einen erdfesten Stein 32 (vgl. Fig. 4).

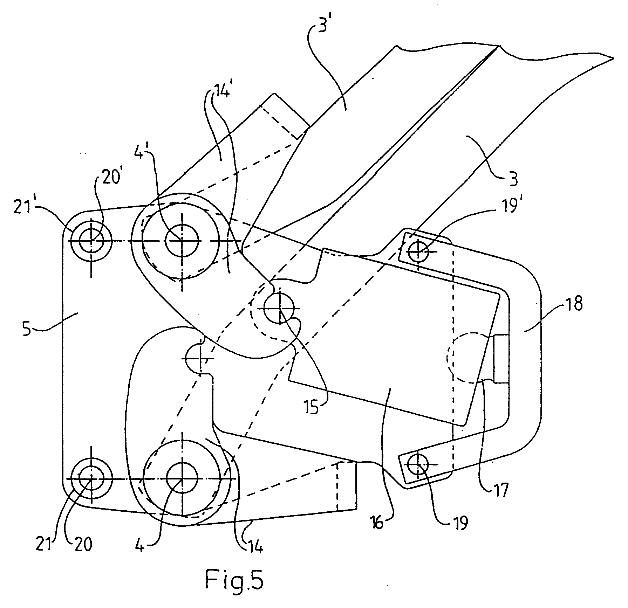

Während dieser Bewegung drückt der Hydraulikzylinder 16 gegen den Hebel 14, der seinerseits über den Grindel 3' auf den Grindel 3 drückt (vgl. Fig. 4,5). Nach dem Überfahren des Bodenhindernisses 32 nimmt der auf den Pflugkörper 2 wirkende Bodenwiderstand ab und kehrt der Pflugkörper 2 in seine normale Arbeitslage zurück, während der andere Hebel 14 seine normale Lage nicht verläßt.

Nach einem Drehen des Pflugs kommt der bis dahin in der Ruhestellung befindliche Grindel 3' mit dem zugehörigen Pflugkörper 2' in die Arbeitsstellung. Bei einer Kollision mit einem Bodenhindernis, beispielsweise einem großen erdfesten Stein 32, und dem Pflugkörper 2' vollführt der Hebel 14 dieselbe Bewegung wie der Hebel 14' im Falle einer Kollision des Pflugkörpers 2 mit einem Bodenhindernis.

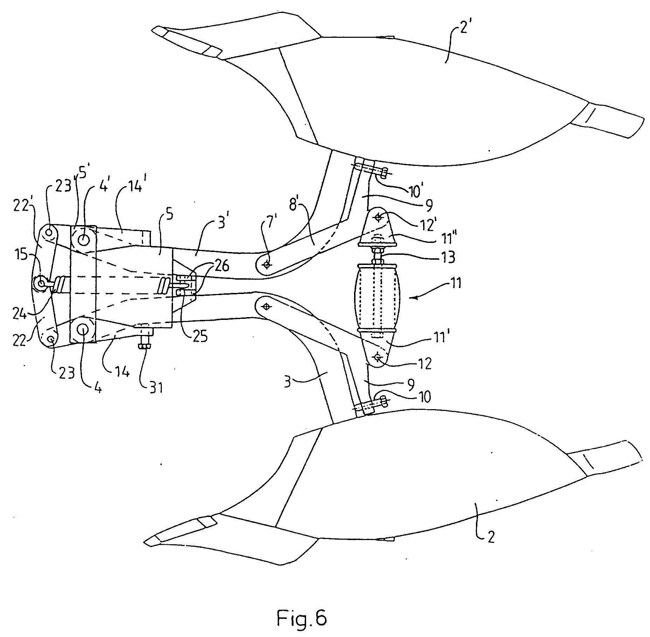

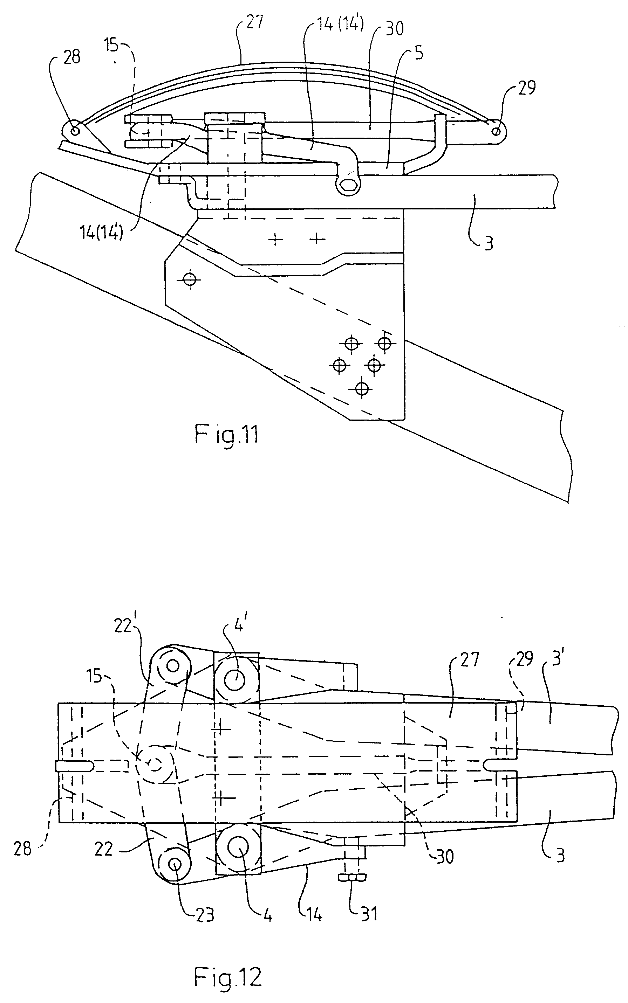

An die Stelle des Hydraulikzylinders 16 kann auch eine Schrauben- oder Blattfeder treten. Dies zeigen die Darstellungen in den Fig. 6 bis 13.

Bei den Steinsicherungen nach den Fig. 6 bis 13 treten an die Stelle der gebogenen Hebel gerade Hebel mit Kniehebeln 22, 22', die durch einen gemeinsamen Zapfen 15 gelenkig miteinander verbunden sind. Die anderen Enden der Kniehebel 22, 22' sind ebenfalls verschwenkbar auf Zapfen 23, 23' am Ende der Hebel 14, 14' angeordnet.

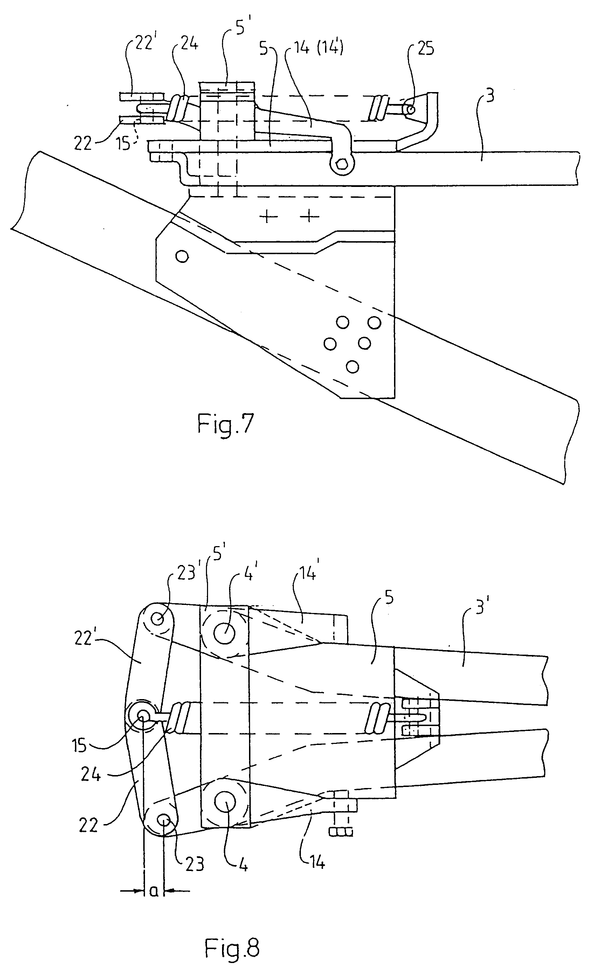

Der horizontale Abstand a zwischen der Achse des Zapfens 15 einerseits und den Achsen der Zapfen 23, 23' andererseits wird im Einzelfall so gewählt, daß sich zwischen der von der betreffenden Schraubenfeder ausgeübten Kraft und der Auslösekraft zum Ausheben eines auf ein Bodenhindernis treffenden Pflugkörpers ein ausgewogenes Verhältnis ergibt (vgl. Fig. 8). Bei einer bestimmten Federkraft führt ein geringer Abstand a zu einer großen Auslösekraft.

Bei der Pflugaufhängung nach den Fig. 6 bis 9 besteht der Kraftspeicher aus einer an dem Zapfen 15 angreifenden Schraubenfeder 24, deren anderes Ende auf einem Zapfen 25 zwischen zwei Ohren 26 der Platte 5 gelagert ist.

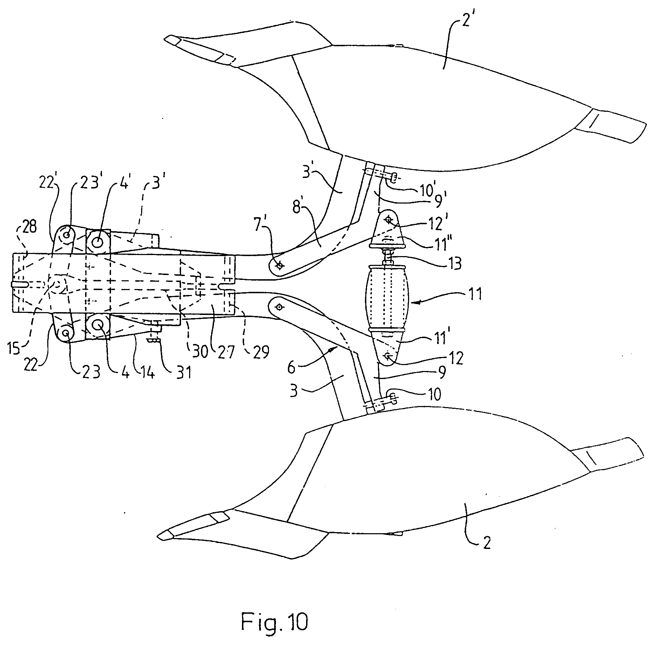

Im Gegensatz dazu besteht bei der Pflugaufhängung nach den Fig. 10 bis 13 der Kraftspeicher aus einer Blattfeder 27, die sich zwischen einem Lagerzapfen 28 an der Platte 5 und einem Lagerzapfen 29 am Ende einer Stange 30 erstreckt, deren anderes Ende mit dem Zapfen 15 verbunden ist.

Bei allen drei Varianten der erfindungsgemäßen Pflugaufhängung können die Hebel 14, 14' mit einer Stellschraube 31 versehen sein, die sich an dem jeweils benachbarten Grindel 3, 3' abstützt, um so eine mögliche Schlaffheit auszugleichen und beide Grindel 3, 3' in eine korrekte Normallage beim Pflügen zu bringen.

Die Schraubenfeder 24, ein Hydraulikzylinder oder die Blattfeder 27 übt eine Kraft auf den Zapfen 15 aus, der über die Kniehebel 22, 22' die Zapfen 23, 23' auseinanderdrückt und auf diese Weise über die Hebel 14, 14' einen Druck auf die Grindel 3, 3' ausübt.

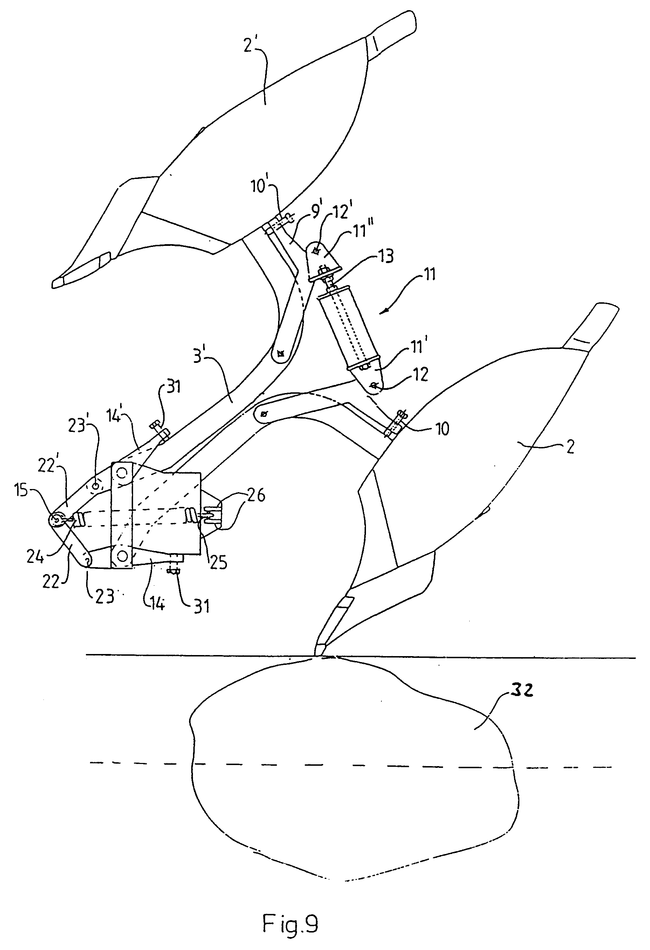

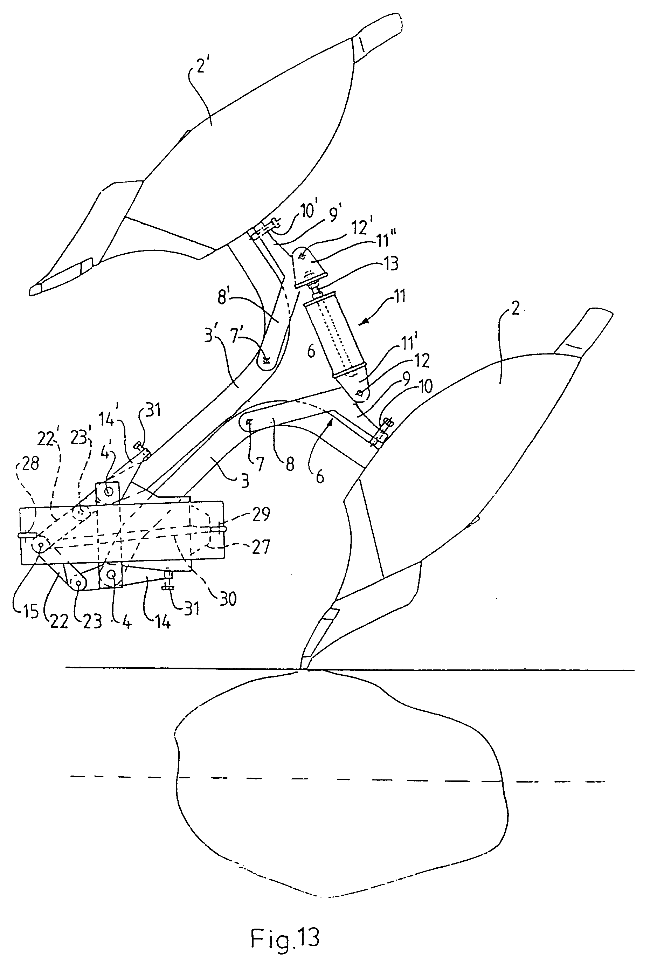

Trifft der Pflugkörper 2 auf einen Stein 32 und gleitet darüber hinweg, dann nimmt die Pflugaufhängung nach den Fig. 6 bis 13 die in den Fig. 9 und 13 dargestellte Lage ein. In dieser Lage drückt der Hebel 14 nicht mehr gegen den unteren Grindel 3, jedoch weiterhin gegen die Kante der Platte 5.

Bei den Ausführungsbeispielen der Fig. 6 bis 13 dienen die beiden Hebel 14, 14' als Abstandhalter zwischen den Platten 5, 5'.

## Patentansprüche

1. Pflugkörperaufhängung, insbesondere für einen Dreh- oder Wendepflug mit mindestens einem Pflugkörperpaar, mit:
- mindestens einem Pflugkörper (2,2') am Ende eines von zwei benachbarten und mittels je eines Schwenkgelenks (4,4') gelenkig am Pflugrahmen (1) befestigten Grindeln (3,3'), wobei der eine, den Pflugkörper tragende Grindel mit einem Lenker (8,8') verbunden ist, an dem ein mit dem Lenker (8,8') des benachbarten, zweiten Grindels verbundener Stoßdämpfer (11) angreift, und
- einem eine Stein-Überlastsicherung bildenden und am benachbarten, zweiten Grindel angreifenden Schwenkanschlag (14a,14a') am Pflugrahmen (1);
dadurch gekennzeichnet, daß
- der Schwenkanschlag (14a,14a') aus einem im Bereich des Schwenkgelenks (4,4') mit seinem Ende am benachbarten, zweiten Grindel (3,3') angreifenden und koaxial zu diesem gelagerten Hebel (14,14') besteht, und daß
- mit dem Hebel (14,14') ein Kraftspeicher (16;24;27) verbunden ist, so daß der den Pflugkörper (2,2') tragende eine Grindel über den Stoßdämpfer, den Hebel (14,14') und den Kraftspeicher (16;24;27) auf dem Pflugrahmen (1) abgestützt ist.

2. Pflugkörperaufhängung nach Anspruch 1, dadurch gekennzeichnet, daß der Grindel (3, 3') zwischen mit dem Pflugrahmen (1) verbundenen Platten (5, 5') gelagert ist.

3. Pflugkörperaufhängung nach einem der Ansprüche 1 bis 2, dadurch gekennzeichnet, daß der Hebel (14, 14') bogen- oder winkelförmig ausgebildet ist.

4. Pflugkörperaufhängung nach einem der Ansprüche 1 bis 3, dadurch gekennzeichnet, daß ein Hydraulikzylinder (16) über einen Zapfen (15) mit dem Hebel (14, 14') lösbar verbunden ist.

5. Pflugkörperaufhängung nach Anspruch 4, dadurch gekennzeichnet, daß sich der Hydraulikzylinder (16) über eine Lagerkugel (17) am Pflugrahmen (1) abstützt.

6. Pflugkörperaufhängung nach Anspruch 5, dadurch gekennzeichnet, daß die Lagerkugel (17) an einem mit dem Pflugrahmen oder Grindelträger (1) verbunden Bügel (18) angeordnet ist.

7. Pflugkörperaufhängung nach einem der Ansprüche 1 bis 2, dadurch gekennzeichnet, daß zwischen den Enden der Hebel (14, 14') zweier benachbarter Grindel (3, 3') Kniehebel (22, 22') angeordnet sind, in deren Gelenk (15) der Kraftspeicher (24, 27) angreift.

8. Pflugkörperaufhängung nach Anspruch 7, dadurch gekennzeichnet, daß eine Blattfeder (27) gelenkig mit einer Stange (30) verbunden ist und die Stange im Kniehebelgelenk (15) angreift.

9. Pflugkörperaufhängung nach einem der Ansprüche 1 bis 8, dadurch gekennzeichnet, daß der Hebel (14, 14') im Bereich seines freien Endes mit einer am Grindel (3, 3') anliegenden Stellschraube (31) versehen ist.

## Claims

1. Plough body suspension, particularly for a turn-over or two-way plough with at least one pair of plough bodies, having:
- at least one plough body (2, 2') at the end of one of two adjacent plough beams (3, 3') articulated to the plough frame (1) by means of respective pivot joints (4, 4'), the first beam, which carries the plough body, being connected to a guide lever (8, 8') with which a shock-absorber (11) connected to the guide lever (8, 8') of the adjacent second beam engages, and
- a pivot stop (14a, 14a') on the plough frame (1) which forms a stone-overload protector and engages with the adjacent second beam,
characterised in that
- the pivot stop (14a, 14a') consists of a lever (14, 14') which, in the region of the pivot joint (4,4') engages with the adjacent second beam (3, 3') with its end and which is mounted coaxially with said second beam, and that
- an energy storing device (16; 24; 27)is connected to the lever (14, 14') so that the first beam which carries the plough body (2, 2') is supported on the plough frame (1) via the shock-absorber, the lever (14, 14') and the energy storing device (16; 24; 27).

2. Plough body suspension according to claim 1, characterised in that the beam (3, 3') is mounted between plates (5, 5') connected to the plough frame (1).

3. Plough body suspension according to claim 1 or claim 2, characterised in that the lever (14, 14') is arcuate or angular in shape.

4. Plough body suspension according to one of claims 1 to 3, characterised in that a hydraulic cylinder (16) is releasably connected to the lever (14, 14') via a pin (15).

5. Plough body suspension according to claim 4, characterised in that the hydraulic cylinder (16) is supported on the plough frame (1) through a bearing ball (17).

6. Plough body suspension according to claim 5, characterised in that the bearing ball (17) is carried on a shackle (18) connected to the plough frame or beam carrier (1).

7. Plough body suspension according to claim 1 or claim 2, characterised in that toggle levers (22, 22') are fitted between the ends of the levers (14, 14') of two adjacent beams (3, 3') and the energy storing device (24, 27) engages with the hinge (15) of said toggle levers.

8. Plough body suspension according to claim 7, characterised in that a leaf spring (27) is pivotally connected to a rod (30) and the rod engages with the hinge (15) of the toggle levers.

9. Plough body suspension according to one of claims 1 to 8, characterised in that the lever (14, 14') is provided in the region of its free end with an adjusting screw (31) bearing on the beam (3, 3').

## Revendications

1. Suspension pour corps de charrue, notamment pour une charrue brabant ou une charrue à bascule avec au moins une paire de corps de charrue, comprenant :
- au moins un corps de charrue (2, 2') à l'extrémité de l'un des deux timons adjacents (3, 3') qui sont chacun fixés de façon articulée au cadre de charrue (1) par une articulation (4, 4'), sachant que le premier timon, qui porte le corps de charrue, est relié à une bielle (8, 8') sur laquelle agit un amortisseur (11) relié à la bielle (8, 8') du second timon adjacent, et
- sur le cadre de charrue (1), une butée de pivotement (14a, 14a') formant une sécurité contre la surcharge provoquée par des pierres et agissant sur le second timon adjacent, caractérisée en ce que la butée de pivotement (14a, 14a') est composée d'un levier (14, 14') agissant avec son extrémité, dans la zone de l'articulation (4, 4'), sur le second timon adjacent (3, 3') et monté de manière coaxiale par rapport à ce dernier, et en ce qu'un accumulateur d'énergie (16 ; 24 ; 27) est relié au levier (14, 14'), de sorte que le timon portant le corps de charrue (2, 2') prend appui par le biais de l'amortisseur, le levier (14, 14') et l'accumulateur d'énergie (16 ; 24 ; 27), sur le cadre de charrue (1).

2. Suspension pour corps de charrue selon la revendication 1, caractérisée en ce que le timon (3, 3') est monté entre des plaques (5, 5') reliées au cadre de charrue (1).

3. Suspension pour corps de charrue selon la revendication 1 ou 2, caractérisée en ce que le levier (14, 14') est réalisé en forme d'arc de cercle ou forme un coude.

4. Suspension pour corps de charrue selon l'une des revendications 1 à 3, caractérisée en ce qu'un vérin hydraulique (16) est relié de façon amovible au levier (14, 14') par l'intermédiaire d'un pivot (15).

5. Suspension pour corps de charrue selon la revendication 4, caractérisée en ce que le vérin hydraulique (16) prend appui sur le cadre de charrue (1) par le biais d'une bille (17).

6. Suspension pour corps de charrue selon la revendication 5, caractérisée en ce que la bille (17) est placée sur un étrier (18) relié au cadre de charrue ou au support de timon (1).

7. Suspension pour corps de charrue selon la revendication 1 ou 2, caractérisé en ce qu'entre les extrémités des leviers (14, 14') de deux timons adjacents (3, 3') sont placés des leviers à genouillère (22, 22'), sur l'articulation (15) desquels agit l'accumulateur d'énergie (24, 27).

8. Suspension pour corps de charrue selon la revendication 7, caractérisée en ce qu'un ressort à lame (27) est relié de façon articulée à une barre (30), et en ce que la barre agit sur l'articulation (15) des leviers à genouillère.

9. Suspension pour corps de charrue selon l'une des revendications 1 à 8, caractérisée en ce que le levier (14, 14') est muni dans la zone de son extrémité libre d'une vis de réglage (31) appliquée sur le timon (3,3').
